# EUROPEAN PATENT APPLICATION

(11) **EP 4 835 525 A1**
(43) Date of publication of application: **04.11.2026**
(21) Application number: 24911918.1
(22) Date of filing: 08.10.2024
(51) Int. Cl.: G02B 5/18, G01J 3/18

(54) **DIFFRACTION GRATING AND SPECTROMETER**

(30) Priority: 27.12.2023 JP 2023220192
(71) Applicant: Konica Minolta, Inc., Tokyo 100-7015 (JP)
(72) Inventor: OKUDA, Ryohei, Tokyo 100-7015 (JP); NAKATANI, Toru, Tokyo 100-7015 (JP)
(74) Representative: MFG Patentanwälte Meyer-Wildhagen Meggle-Freund Gerhard PartG mbB
(86) International application number: PCT/JP2024/035966
(87) International publication number: WO 2025/142024

(57) **Abstract**

The purpose of the technology disclosed in the present specification is to inhibit occurrence of comatic aberration. This diffraction grating has a body, a reflection surface, and a plurality of grating grooves. The reflection surface is formed on the surface of the body. The reflection surface is provided in a recess surface shape. The grating grooves are formed on the reflection surface. The grating grooves are arranged along the reflection surface such that intervals are narrowed from a first edge of the reflection surface toward a second edge opposite to the first edge. The grating grooves extend along the reflection surface in a direction orthogonal to the arrangement direction of the grating grooves. The grating grooves have triangular cross-sectional shapes in cross sections perpendicular to the extending direction of the grating grooves. The closer the grating grooves are to the first edge, the smaller the widths of the grating grooves in the arrangement direction are. The closer the adjacent grating grooves are to the first edge, the greater the differences in width between the adjacent grating grooves are.

## Description

### Technical Field

The technology disclosed herein relates to a diffraction grating and a spectrometer.

### Background Art

Patent Document 1 discloses a spectrometer and a concave diffraction grating used therein. The reflective surface of the concave diffraction grating is formed in a sawtooth shape. That is, a plurality of grating grooves having a triangular cross-sectional shape are arranged along a spherical concave surface contiguously, and the arrangement of the grating grooves forms a sawtooth shape. These grating grooves have a width in the arrangement direction. These grating grooves are arranged in order of increasing width, and the difference in width between adjacent grating grooves is always the same. Even though the arrangement of the grating grooves is so regular, coma aberration occurs in the light diffracted by the concave diffraction grating.

### Citation List

### Patent Literature

Patent Document 1: Japanese Unexamined Patent Application Publication No. 2020-34693

### Summary of Invention

### Technical Problem

Accordingly, an object of the technology disclosed in the present specification is to suppress the occurrence of coma aberration.

### Solution to Problem

To solve the above problem, the present specification discloses a diffraction grating.

The diffraction grating includes a main body, a reflective surface, and a plurality of grating grooves. The reflective surface is formed on a surface of the main body. The reflective surface has a concave shape. The plurality of grating grooves is formed on the reflective surface. The plurality of grating grooves is arranged along the reflective surface contiguously from a first edge of the reflective surface toward a second edge opposite the first edge. The plurality of grating grooves extends along the reflective surface in a direction orthogonal to a direction in which the plurality of grating grooves is arranged. Each of the plurality of grating grooves has a triangular cross-sectional shape in a cross section perpendicular to the direction in which the each of the plurality of grating grooves extends. A width of one of the plurality of grating grooves in the direction in which the plurality of grating grooves is arranged is smaller as the one of the plurality of grating grooves is closer to the first edge. A difference in width between adjacent ones of the plurality of grating grooves is larger as the adjacent ones of the plurality of grating grooves are closer to the first edge.

### Advantageous Effects of Invention

The technique disclosed herein contributes to suppressing the occurrence of coma aberration.

### Brief Description of Drawings

[FIG. 1] FIG. 1 is a diagram illustrating an overall configuration of a spectrometer.
[FIG. 2] FIG. 2 is an enlarged view of the reflective surface of a diffraction grating.
[FIG. 3] FIG. 3 is a schematic diagram for explaining the shape of the diffraction grating.
[FIG. 4] FIG. 4 is a schematic diagram for explaining the shape of the diffraction grating.
[FIG. 5] FIG. 5 is a chart showing a relationship among a level number, a staircase shape, maximum first-order diffraction efficiency, and an optimum height of a grating groove.
[FIG. 6] FIG. 6 is a diagram showing a function obtained by dividing a phase function by a normalized wavelength.
[FIG. 7] FIG. 7 is a diagram showing a relationship between a position in a Y-direction and the width of the grating groove.
[FIG. 8] FIG. 8 is a diagram showing a relationship between the position in the Y-direction and the width of the grating groove.
[FIG. 9] FIG. 9 is a diagram showing a relationship between the position in the Y-direction and a difference in width between adjacent grating grooves.
[FIG. 10] FIG. 10 is a diagram showing a relationship between the position in the Y-direction and the difference in width between adjacent grating grooves.
[FIG. 11] FIG. 11 is a diagram illustrating the full width at half maximum for each wavelength.
[FIG. 12] FIG. 12 is a diagram illustrating the full width at half maximum for each wavelength.

### Description of Embodiments

Hereinafter, one or more embodiments will be described with reference to the drawings. The features and technical advantages of the embodiments will be understood from the following detailed description and the drawings. However, the scope of the present invention is not limited to the embodiments disclosed below. The drawings are provided for illustrative purposes only, and the scope of the present invention is not limited to the illustrations in the drawings.

### <<1. Spectrometer>>

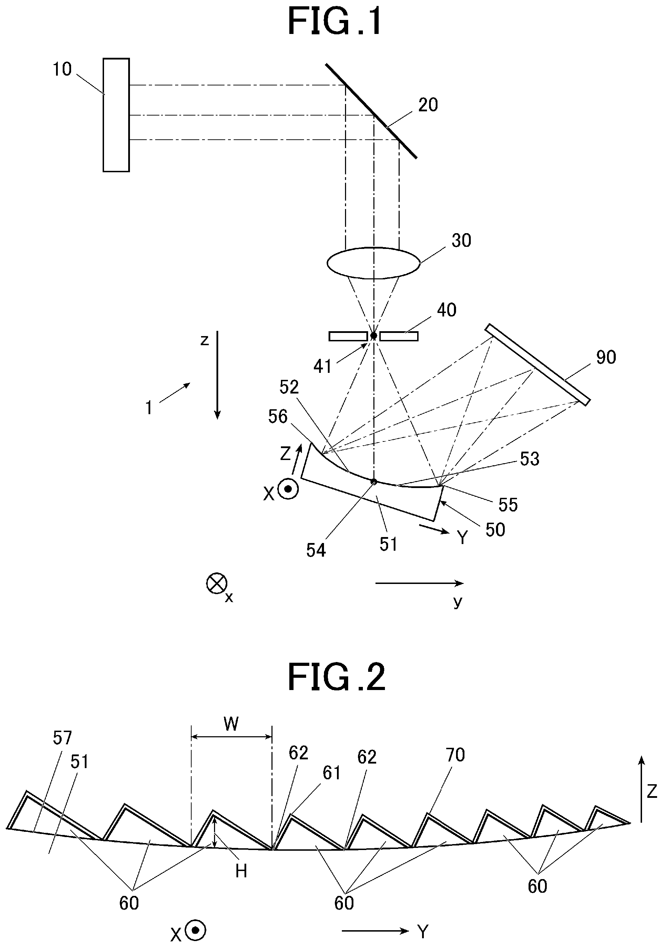

FIG. 1 is a diagram illustrating the overall configuration of a spectrometer 1. The spectrometer 1 measures the spectral characteristics of a light source. As shown in FIG. 1, the spectrometer 1 includes a diffusion plate 10, a mirror 20, a condenser lens 30, a light-shielding member 40, a diffraction grating 50, and a light-receiving sensor 90.

### <<2. Diffusion Plate>>

The diffusion plate 10 is disposed opposite the light source. When light from the light source is incident on the diffusion plate 10, the light is diffused and transmitted through the diffusion plate 10. The light to be measured, which has been diffused and transmitted through the diffusion plate 10, is incident on the mirror 20.

### <<3. Mirror>>

The mirror 20 is disposed on the opposite side of the light source with respect to the diffusion plate 10. The mirror 20 is tilted relative to a plane parallel to the diffusion plate 10 toward the condenser lens 30. The mirror 20 reflects the light to be measured received from the diffusion plate 10 toward the condenser lens 30.

### <<4. Condenser Lens>>

The condenser lens 30 is disposed on the side where the mirror 20 reflects the light to be measured. The condenser lens 30 focuses the light to be measured received from the mirror 20 onto a slit 41 of the light-shielding member 40. The optical axis of the condenser lens 30 is parallel to the plane of FIG. 1. Hereinafter, the direction parallel to the optical axis of the condenser lens 30 is referred to as the z-direction.

### <<5. Slit>>

The light-shielding member 40 is disposed on the opposite side of the mirror 20 with respect to the condenser lens 30. The light-shielding member 40 has the slit 41 penetrating the light-shielding member 40. The slit 41 is formed in an elongated rectangular shape so as to extend in a direction orthogonal to the optical axis of the condenser lens 30. The direction in which the slit 41 extends is perpendicular to the plane of FIG. 1. The plane defined by the long side and the short side of the slit 41 is orthogonal to the optical axis of the condenser lens 30. Hereinafter, the direction parallel to the long side of the slit 41 is referred to as the x-direction, and the direction parallel to the short side of the slit 41 is referred to as the y-direction. The x-direction, the y-direction, and the z-direction are orthogonal to each other. The optical axis of the condenser lens 30 passes through the slit 41 and intersects the center of the diffraction grating 50 described below. The coordinate system defined by the mutually orthogonal x-axis, y-axis, and z-axis is referred to as the absolute coordinate system. The origin of the absolute coordinate system is set at the center of the slit 41, and the optical axis of the condenser lens 30 coincides with the z-axis.

### <<6. Diffraction Grating>>

The diffraction grating 50 is disposed on the opposite side of the condenser lens 30 with respect to the light-shielding member 40. The diffraction grating 50 is inclined about a rotation axis from an orientation facing the light-shielding member 40 and the condenser lens 30. This rotation axis is orthogonal to the optical axis of the condenser lens 30 and is parallel to the x-direction.

The diffraction grating 50 is a reflective blazed concave diffraction grating. The diffraction grating 50 spectrally disperses the light to be measured that has passed through the slit 41 via the diffraction phenomenon, while also reflecting that light toward the light-receiving sensor 90. Consequently, the images of the light to be measured at the slit 41 are arranged by wavelength and imaged onto the light-receiving sensor 90. Hereinafter, the band of light formed on the light-receiving sensor 90 by arranging the images of the light to be measured by wavelength along the longitudinal direction of the light-receiving sensor 90 is referred to as a spectrum.

### <<7. Light-receiving Sensor>>

The light-receiving sensor 90 is disposed offset from the optical axis extending from the slit 41 of the light-shielding member 40 to the reflective surface 53 (described below) of the diffraction grating 50 toward the side that the inclined diffraction grating 50 faces. Accordingly, the light-receiving sensor 90 is disposed on the side where the diffraction grating 50 reflects the light to be measured. The light-receiving sensor 90 detects the intensity of the spectrum formed by the diffraction grating 50 at the light-receiving sensor 90 for each wavelength. The light-receiving sensor 90 includes a plurality of photoelectric conversion elements that converts light intensity into electric signals. Since these photoelectric conversion elements are arranged in a straight line in the longitudinal direction of the light-receiving sensor 90, the light-receiving sensor 90 is a line sensor. The light-receiving sensor 90 is inclined about an axis parallel to the x-direction from an orientation in which the longitudinal direction of the light-receiving sensor 90 is parallel to the y-direction.

### <<8. Reflective Surface of Diffraction Grating>>

### (1) Free-form surface

The diffraction grating 50 has a plate-like main body 51. The main body 51 has, on a surface 52 obliquely facing the condenser lens 30 and the light-shielding member 40, a concave and aspherical reflective surface 53. The reflective surface 53 is formed as a free-form surface. When the shape of the reflective surface 53 is defined by a relative coordinate system established for the diffraction grating 50, the X-, Y-, and Z-coordinates of each point on the reflective surface 53 are expressed by the following polynomial (1). The relative coordinate system established for the diffraction grating 50 is defined by mutually orthogonal X-, Y-, and Z-axes.
[Expression 1] $Z \left(X, Y\right) = \frac{C \left({X}^{2}+{Y}^{2}\right)}{1 + \sqrt{1 - {C}^{2} \left({X}^{2}+{Y}^{2}\right)}} + \sum {C}_{ab} \left({X}^{a}+{Y}^{b}\right)$ (1)

In Equation (1), C is the curvature of the reference surface, and the curvature of the reference surface is the reciprocal of the radius of curvature of the reference surface. Since the reference surface for determining the shape of the reflective surface 53 is the XY plane and the radius of curvature of the XY plane is infinite, C = 0. The values of the coefficients C_{ab} in Equation (1) are, for example, as shown in Table I or Table II below.

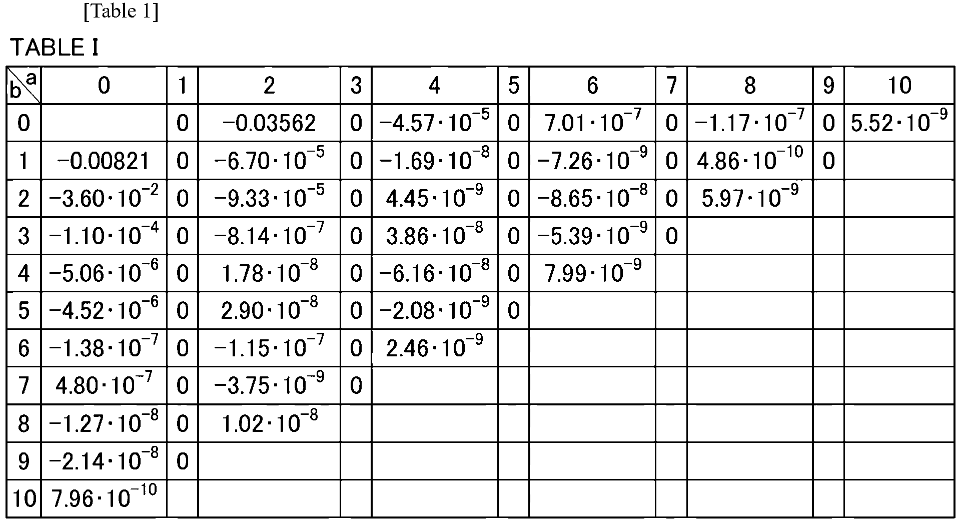

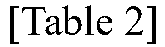

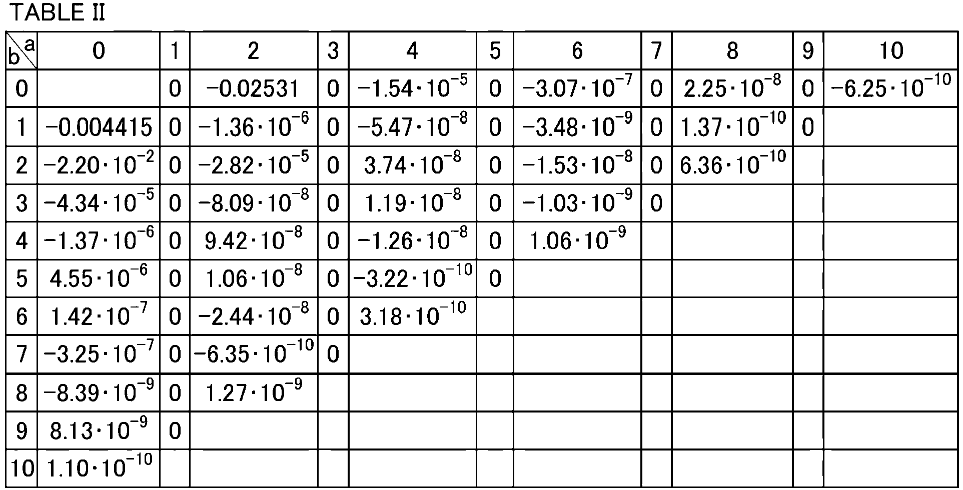

When the order of X is odd, the value of the coefficient C_{ab} is zero. Therefore, the reflective surface 53 is plane-symmetrical with respect to the YZ plane.

The center 54 of the reflective surface 53 is set at the origin of the relative coordinate system. The diffraction grating 50 is disposed such that the optical axis of the condenser lens 30 passes through the center 54 of the reflective surface 53. That is, the diffraction grating 50 is disposed such that the optical axis of the condenser lens 30 passes through the origin of the relative coordinate system. In the absolute coordinate system, the diffraction grating 50 is inclined about the above-described rotation axis from an orientation in which the X-axis of the relative coordinate system for defining the shape of the reflective surface 53 is parallel to the x-axis of the absolute coordinate system and the Y-axis of the relative coordinate system is parallel to the y-axis of the absolute coordinate system. This rotation axis is parallel to the x-direction, as described above, and passes through the center 54 of the reflective surface 53. Accordingly, the direction in which the reflective surface 53 reflects the light to be measured is inclined from the optical axis of the condenser lens 30 toward the light-receiving sensor 90. The reflective surface 53 has edges 55 and 56 in the Y-direction. The edge 55 is the edge proximal to the light-receiving sensor 90, and the edge 56 is the edge distal to the light-receiving sensor 90. That is, the edge 55 is the edge toward which the diffraction grating 50 is inclined, and the edge 56 is the edge opposite the edge toward which the diffraction grating 50 is inclined.

In the region of the reflective surface 53 closer to the edge 55 than the center 54, the curvature of the reflective surface 53 increases as the distance from the center 54 increases. The region of the reflective surface 53 closer to the edge 55 than the center 54 refers to the region closer to the light-receiving sensor 90 than the center 54. The region of the reflective surface 53 closer to the edge 55 than the center 54 refers to the region toward which the diffraction grating 50 is inclined relative to the center 54.

In the region of the reflective surface 53 closer to the edge 56 than the center 54, the curvature of the reflective surface 53 decreases as the distance from the center 54 increases. The region of the reflective surface 53 closer to the edge 56 than the center 54 refers to the region farther away from the light-receiving sensor 90 than the center 54. The region of the reflective surface 53 closer to the edge 56 than the center 54 refers to the region opposite the region toward which the diffraction grating 50 is inclined relative to the center 54.

### (2) Sawtooth Shape and Reflective Film

As shown in FIG. 2, an array of a plurality of grating grooves 60 is formed on the reflective surface 53 having the free-form surface shape 57 described above, and the array of grating grooves 60 is formed in a sawtooth shape. A reflective film 70 is formed on the surfaces of the grating grooves 60. The reflective film 70 is formed of a dielectric multilayer film, a metal film, or a combination thereof grown by a film forming method such as vapor deposition or sputtering. The reflective film 70 has a reflectable wavelength range of 360 to 1100 nm, and the reflective film 70 reflects not only visible light but also infrared light with high reflectivity.

The plurality of grating grooves 60 extends in the X-direction along the reflective surface 53 and are arranged along the reflective surface 53 contiguously in the Y-direction. The arrangement direction of the grating grooves 60 is the Y-direction. Each of these grating grooves 60 has a triangular cross-sectional shape in a cross section parallel to the YZ plane and the yz plane. That is, each of the grating grooves 60 has a triangular cross-sectional shape in a cross section perpendicular to the X-direction and the x-direction. The arrangement of the grating grooves 60 forms a sawtooth shape. The edges of the array region of the grating grooves 60 in the Y-direction correspond to the edges 55 and 56.

Each of the grating grooves 60 has a height H [nm] from the free-form surface to the apex 61 of the grating groove 60. Each of the grating grooves 60 has a width W [nm] between the base vertices 62 of that grating groove 60. Each of the base vertices 62 of the grating groove 60 forms the boundary between that grating groove 60 and the adjacent grating groove 60.

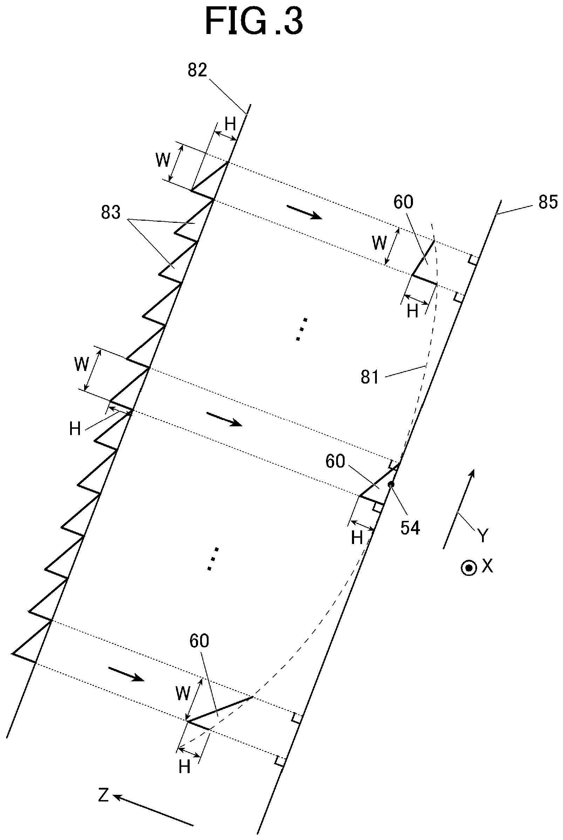

As shown in FIG. 3, the plurality of grating grooves 60 is formed in a shape superimposed on the free-form surface 81 described above. That is, the plurality of grating grooves 60 can be regarded as having a shape formed by affixing the plurality of grating grooves 83 on a plane 82 onto the free-form surface 81. Here, a tangent plane 85 parallel to the X-direction and the Y-direction is tangent to the free-form surface 81 at the center 54, and the plane 82 is parallel to the tangent plane 85. The plurality of grating grooves 83 extends in the X-direction along the plane 82 and is arranged along the plane 82 contiguously in the Y-direction.

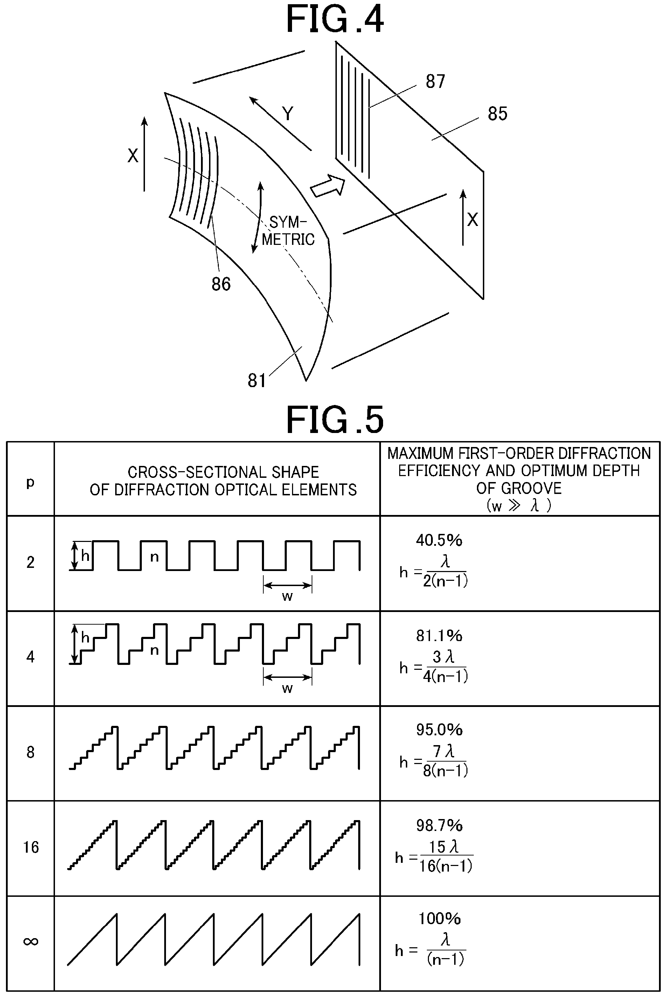

The apex 61 of the grating groove 60 forms a ridge line, and the base vertices 62 of the grating groove 60 form valley lines. Assuming that these ridge lines and valley lines are lines 86 on the free-form surface 81 in FIG. 4, when the lines 86 are projected onto the tangent plane 85 by parallel projection, straight lines 87 appear on the tangent plane 85. The straight lines 87 are parallel to the X-direction and perpendicular to the Y-direction.

### (3) Height of Grating Groove

All of the grating grooves 60 have the same height. When the design wavelength is λ [nm], the height H of the grating groove 60 is one-half of the design wavelength λ, as expressed by the following Equation (2). The design wavelength λ refers to the wavelength at which a high diffraction efficiency is to be obtained by the diffraction grating 50. For example, the design wavelength λ is 500 nm.
[Expression 2] $H = \frac{λ}{2}$ (2)

Since the grating grooves 60 have the same height H, the diffraction efficiency of the diffraction grating 50 is maximized at the design wavelength λ. This can be explained by scalar theory. FIG. 5 shows, when the shape of a triangular grating groove of a general diffraction grating is approximated by a staircase shape, the relationship between the level number, the staircase shape, the maximum first-order diffraction efficiency, and the optimum height of the grating groove. The maximum first-order diffraction efficiency and the optimum height of the grating groove in FIG. 5 are calculated using scalar theory. According to scalar theory, when the width of the grating groove is sufficiently larger than the design wavelength λ, the first-order diffraction efficiency η is maximized, as shown in Equation (4), if the optimum height h of the grating groove satisfies Equation (3). In Equations (3) and (4), p is the level number, and n is the refractive index of the substrate. The level number p is the value obtained by subtracting 1 from the number of grating grooves of the staircase shape when the shape of the triangular grating groove is approximated by the staircase shape.
[Expression 3] $h = \frac{p - 1}{p} ⋅ \frac{λ}{2 n}$ (3) [Expression 4] $η = {sinc}^{2} \left(\frac{π}{p}\right) = {\left(\frac{p}{π}\right)}^{2} ⋅ {sin}^{2} \left(\frac{π}{p}\right)$ (4)

When this scalar theory is applied to the diffraction grating 50, the level number p is infinite, and the refractive index n is 1. Accordingly, Equation (3) becomes Equation (2), and the maximum first-order diffraction efficiency η obtained from Expression (4) is 100%.

### (4) Width of Grating Groove

The closer the grating groove 60 is to the edge 55, the smaller the width W of the grating groove 60. The farther the grating groove 60 is from the edge 55, the larger the width W of the grating groove 60. That is, the closer the grating groove 60 is to the light-receiving sensor 90, the smaller the width W of the grating groove 60. The farther the grating groove 60 is from the light-receiving sensor 90, the larger the width W of the grating groove 60. In other words, the closer the grating groove 60 is to the slope of the diffraction grating 50, the narrower the width W of the grating groove 60 becomes. The farther the grating groove 60 is from the slope of the diffraction grating 50, the wider the width W of the grating groove 60 becomes.

The difference in width W between adjacent grating grooves 60, i.e., the difference obtained by subtracting the width W of the grating groove 60 closer to the edge 55 from the width W of the grating groove 60 farther from the edge 55 among the adjacent grating grooves 60, is not constant. Specifically, the closer the adjacent grating grooves 60 are to the edge 55, the greater the difference in width W between the adjacent grating grooves 60. The farther the adjacent grating grooves 60 are from the edge 55, the smaller the difference in width W between the adjacent grating grooves 60. That is, the closer the adjacent grating grooves 60 are to the light-receiving sensor 90, the greater the difference in width W between the adjacent grating grooves 60. The farther the adjacent grating grooves 60 are from the light-receiving sensor 90, the smaller the difference in width W between the adjacent grating grooves 60. In other words, the closer the adjacent grating grooves 60 are to the slope of the diffraction grating 50, the greater the difference in width W between the adjacent grating grooves 60 becomes. The farther the adjacent grating grooves 60 are from the slope of the diffraction grating 50, the smaller the difference in width W between the adjacent grating grooves 60 becomes.

Furthermore, the absolute value of the rate of change in the difference in width W between adjacent grating grooves 60 at the center of the reflective surface 53 may be smaller than the absolute value of the rate of change in the difference in width W between adjacent grating grooves 60 in regions near the edges 55 and 56.

The shape of the grating grooves 60 of the diffraction grating 50 is designed using the phase function method. In such a design, a polynomial phase function is used. The shape of the grating grooves 60 of the diffraction grating 50 is designed using not only the first- and the second-order terms of the phase function but also the third- and higher-order terms. The fact that the difference in width W between adjacent grating grooves 60 is not constant is due to the use of the third-order or higher-order term of the phase function.

The phase function f(X, Y) defines the phase difference of light rays at the X- and Y-coordinates. The phase function f(X, Y) is expressed by the following Equation (5).
[Expression 5] $f \left(X, Y\right) = \sum {D}_{ij} {X}^{i} {Y}^{j}$ (5)

Here, since i = 0, Equation (5) becomes Equation (6).
[Expression 6] $f \left(Y\right) = \sum {D}_{j} {Y}^{j}$ (6)

When Equation (6) is divided by the normalized wavelength λₙ [nm], Equation (7) is obtained.
[Expression 7] $F \left(Y\right) = \frac{f \left(X, Y\right)}{{λ}_{n}} = \frac{\sum {D}_{j} {Y}^{j}}{{λ}_{n}}$ (7)

The normalized wavelength λₙ may be equal to the design wavelength λ. The normalized wavelength λₙ may be different from the design wavelength λ. The values of the coefficients Dⱼ in Equation (1) are, for example, as shown in Table III or Table IV below.

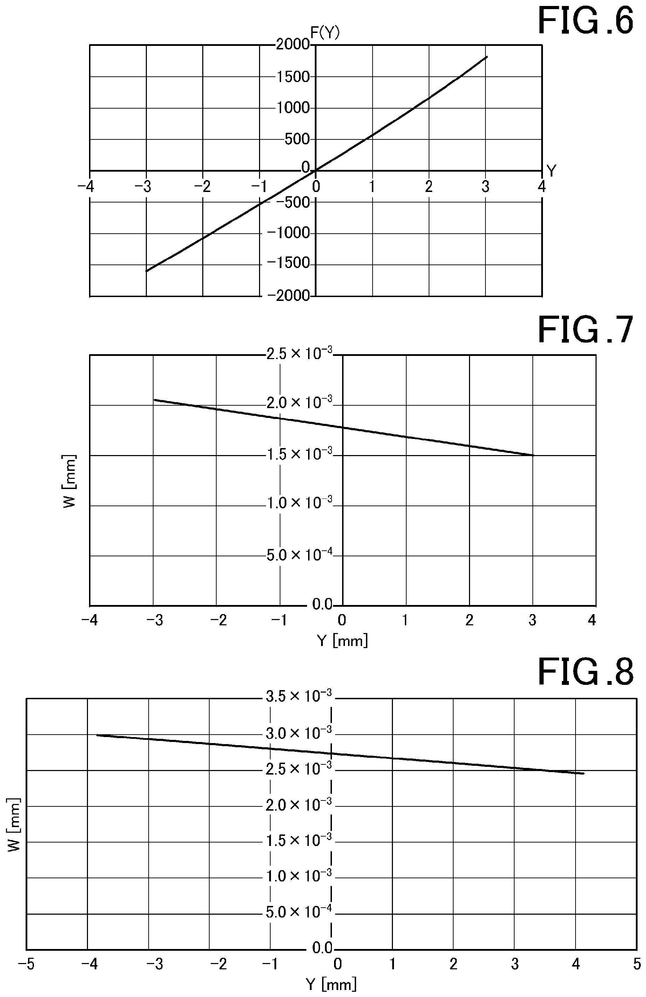

When the values of the coefficients Dⱼ are as shown in Table III below and the normalized wavelength λₙ is 500 nm, Equation (7) is represented by a graph as shown in FIG. 6. In FIG. 6, the horizontal axis represents Y, and the vertical axis represents F(Y).

### [Table 3]

**TABLE III**

| j | Dⱼ |
|---|---|
| 1 | 0.283558 |
| 2 | 0.007109 |
| 3 | 0.000279 |
| 4 | 1.38·10⁻⁵ |
| 5 | 5.03·10⁻⁶ |
| 6 | 3.76·10⁻⁷ |
| 7 | -5.11·10⁻⁷ |
| 8 | -3.52·10⁻⁸ |
| 9 | 2.26·10⁻⁸ |
| 10 | 1.39·10⁻⁹ |

### [Table 4]

**TABLE IV**

| j | Dⱼ |
|---|---|
| 1 | 0.180449 |
| 2 | 0.002232 |
| 3 | 0.000112 |
| 4 | 2.71·10⁻⁶ |
| 5 | -5.41·10⁻⁶ |
| 6 | -6.41·10⁻⁸ |
| 7 | 3.91·10⁻⁷ |
| 8 | -1.32·10⁻¹⁰ |
| 9 | -9.85·10⁻⁹ |
| 10 | 1.41·10⁻¹⁰ |

The value of Y at which the function F(Y) takes an integer value is the width W of the grating groove 60. When the values of the coefficients Dⱼ are as shown in Table III below and the normalized wavelength λₙ is 500 nm, the width W of the grating groove 60 is shown in a graph as illustrated in FIG. 7. When the values of the coefficients Dⱼ are as shown in Table IV below and the normalized wavelength λₙ is 500 nm, the width W of the grating groove 60 is shown in a graph as illustrated in FIG. 8. In FIGS. 7 and 8, the horizontal axis represents the Y-coordinate, and the vertical axis represents the width W of the grating groove 60. As is clear from FIGS. 7 and 8, the closer the grating groove 60 is to the edge 55, the smaller the width W of the grating groove 60 becomes. The farther the grating groove 60 is from the edge 55, the larger the width W of the grating groove 60 becomes. This is due to the use of the third-order or higher-order term of the phase function.

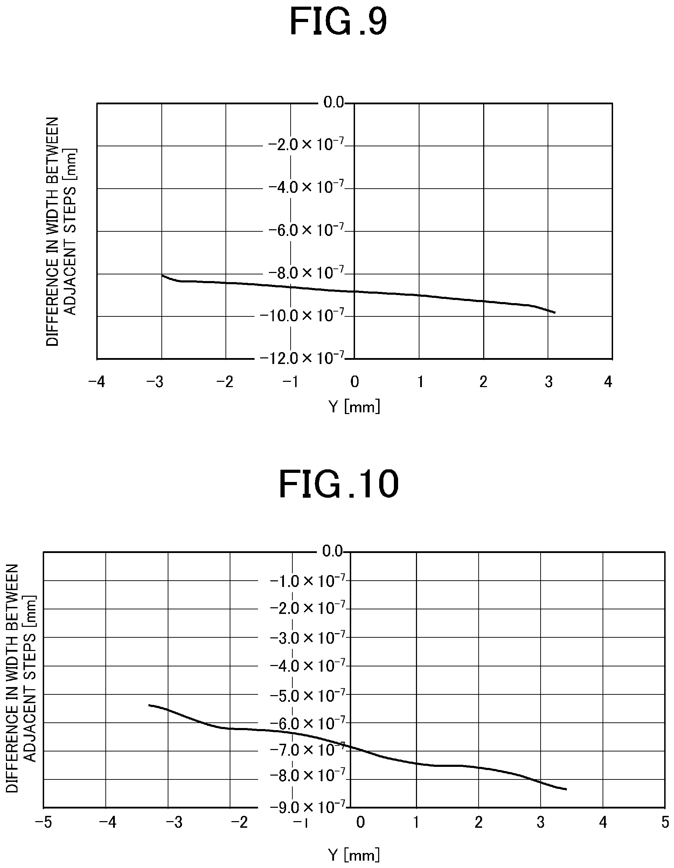

When the values of the coefficients Dⱼ are as shown in Table III and the normalized wavelength λₙ is 500 nm, the difference in width W between adjacent grating grooves 60 is represented by a graph as shown in FIG. 9. When the values of the coefficients Dⱼ are as shown in Table IV and the normalized wavelength λₙ is 500 nm, the difference in width W between adjacent grating grooves 60 is represented by a graph as shown in FIG. 10. In FIGS. 9 and 10, the vertical axis has negative values. This is because the vertical axis represents the difference, among the adjacent grating grooves 60, obtained by subtracting the width W of the grating groove 60 farther from the edge 55 from the width W of the grating groove 60 closer to the edge 55. Among the adjacent grating grooves 60, the difference obtained by subtracting the width W of the grating groove 60 closer to the edge 55 from the width W of the grating groove 60 farther from the edge 55 is positive. Accordingly, as is clear from FIGS. 9 and 10, the closer the adjacent grating grooves 60 are to the edge 55, the greater the difference in width W of the grating grooves 60 becomes. The farther the adjacent grating grooves 60 are from the edge 55, the smaller the difference in width W of the grating grooves 60 becomes. This is due to the use of the third-order or higher-order term of the phase function, which contributes to the reduction of higher-order coma aberration in the Y-direction.

As shown in FIG. 9, the absolute value of the rate of change in the difference in width W between adjacent grating grooves 60 at the center of the reflective surface 53 is smaller than the absolute value of the rate of change in the difference in width W between adjacent grating grooves 60 in regions near the edges 55 and 56.

### <<9. Simulation>>

(1) The inventors simulated the spectral characteristics of the diffraction grating 50. Specifically, the inventors simulated the full width at half maximum of the diffraction grating 50 for each wavelength. The simulation conditions are as follows.

- Shape of the free-form surface
   The values of the coefficients C_{ab} in Formula (1) are as shown in Table I.
- Height of the grating groove
   In Formula (2), the design wavelength λ is 500 nm. The height H of the grating groove 60 is 250 nm.
- Width of the grating groove
   In Equation (7), the normalized wavelength λₙ is 500 nm. The values of the coefficients Dⱼ are as shown in Table III below. The width W of the grating groove 60 is represented by a graph as shown in FIG. 7. The difference in width W between adjacent grating grooves 60 is represented by a graph as shown in FIG. 9.
- Positions and orientations of the light-shielding member, the diffraction grating, and the light-receiving sensor

The positions of the center of the slit 41, the center of the diffraction grating 50, and the center of the light-receiving sensor 90 in the absolute coordinate system are as shown in Table V below. The size of the slit 41, the size of the photoelectric conversion element, and the number of photoelectric conversion elements are as shown in Table VI. The inclination angle of the diffraction grating 50 from the orientation facing the light-shielding member 40 and the condenser lens 30 is as follows. The inclination angle of the light-receiving sensor 90 from the orientation in which the longitudinal direction of the light-receiving sensor 90 is parallel to the y-direction is as shown in Table V below.

### [Table 5]

**TABLE V**

| | x | y | z | Inclination angle |
|---|---|---|---|---|
| Slit | 0 | 0 | 0 | 0° |
| Diffraction grating | 0 | 0 | 15 | -7° |
| Light-receiving sensor | 0 | 10 | 3 | -10° |

### [Table 6]

**TABLE VI**

| Size of slit | Width 50 *µ* m, Length 500 *µ* m |
|---|---|
| Size of photoelectric conversion element of light-receiving sensor | 200 *µ* m x 20 *µ* m, pitch 20 *µ* m |
| Number of photoelectric conversion elements of light-receiving sensor | 512 |

On the other hand, the inventors simulated the spectral characteristics of the diffraction grating of a comparative example. The simulation conditions for the diffraction grating of the comparative example differ from those for the diffraction grating 50 only in the width of the grating groove. In the diffraction grating of the comparative example, the grating grooves are designed using only first- and second-order terms of a phase function, without using third- or higher-order terms. Therefore, the difference in width between adjacent grating grooves is always constant.

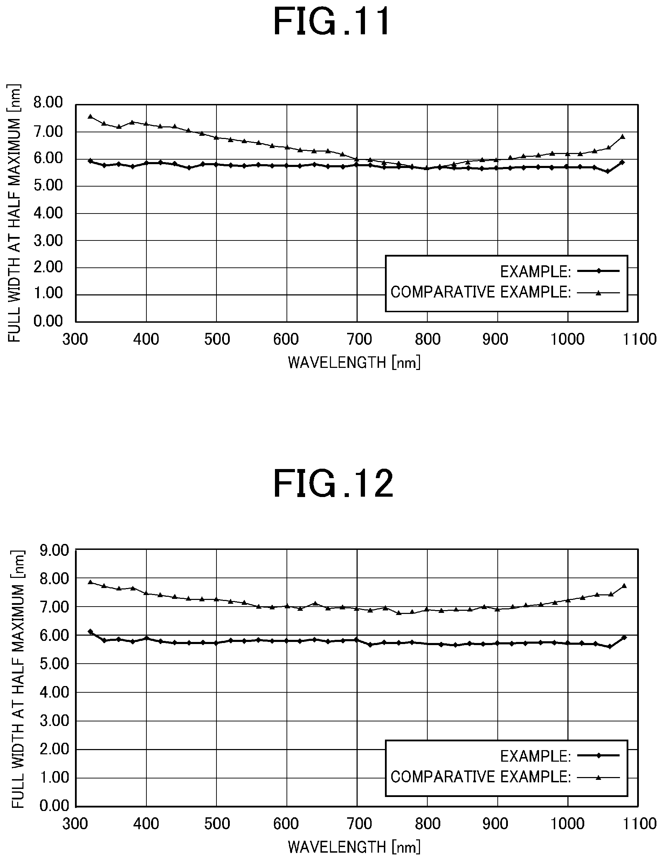

FIG. 11 shows the simulation results. As is clear from FIG. 11, in the wavelength regions of visible light and infrared light, the full width at half maximum of the diffraction grating 50 is smaller than the full width at half maximum of the diffraction grating of the comparative example. Thus, in the diffraction grating 50, the reduction in higher-order coma aberration in the Y direction results in a smaller amount of aberration (spread) of the diffraction image in the wavelength direction. Consequently, the optical wavelength resolution can be increased, and therefore the full width at half maximum can be kept small. Conversely, in the case of the comparative example, where higher-order coma aberration cannot be reduced over a wide wavelength range, the spread of the diffraction image in the wavelength direction increases at the edges of the wavelength range, resulting in a larger full width at half maximum.

(2) Under conditions different from those in (1) above, the inventors simulated the spectral characteristics of the diffraction grating 50 and the diffraction grating of the comparative example. The simulation conditions are as follows.
- Shape of the free-form surface
   The values of the coefficients C_{ab} in Equation (1) are as shown in Table II.
- Height of the grating groove
   In Formula (2), the design wavelength λ is 500 nm. The height H of the grating groove 60 is 250 nm.
- Width of the grating groove
   In Equation (7), the normalized wavelength λₙ is 500 nm. The values of the coefficients Dⱼ are as shown in Table IV below. The width W of the grating groove 60 is represented by a graph as shown in FIG. 8. The difference in width W between adjacent grating grooves 60 is represented by a graph as shown in FIG. 10.
- Positions and orientations of the light-shielding member, the diffraction grating, and the light-receiving sensor

The positions of the center of the slit 41, the center of the diffraction grating 50, and the center of the light-receiving sensor 90 in the absolute coordinate system are as shown in Table VII below. The size of the slit 41, the size of the photoelectric conversion element, and the number of photoelectric conversion elements are as shown in Table VIII. The inclination angle of the diffraction grating 50 from the orientation facing the light-shielding member 40 and the condenser lens 30 is as follows. The inclination angle of the light-receiving sensor 90 from the orientation in which the longitudinal direction of the light-receiving sensor 90 is parallel to the y-direction is as shown in Table VII below.

### [Table 7]

**TABLE VII**

| | x | y | z | Inclination angle |
|---|---|---|---|---|
| Slit | 0 | 0 | 0 | 0° |
| Diffraction grating | 0 | 0 | 19 | -20° |
| Light-receiving sensor | 0 | 21 | 3 | -32° |

### [Table 8]

**TABLE VIII**

| Size of slit | Width 50 *µ* m, Length 500 *µ* m |
|---|---|
| Size of photoelectric conversion element of light-receiving sensor | 200 *µ* m x 20 *µ* m, pitch 20 *µ* m |
| Number of photoelectric conversion elements of light-receiving sensor | 512 |

FIG. 12 shows the simulation results. As is clear from FIG. 12, in the wavelength regions of visible light and infrared light, the full width at half maximum of the diffraction grating 50 is smaller than the full width at half maximum of the diffraction grating of the comparative example. Therefore, the diffraction grating 50 suppresses higher-order coma aberrations due to diffraction, and the optical characteristics of the diffraction grating 50 are superior to those of the diffraction grating of the comparative example.

### <<10. Summary>>

(1) As described above, the diffraction grating 50 includes the main body 51, the reflective surface 53, and the plurality of grating grooves 60. The reflective surface 53 is formed on the surface of the main body 51. The reflective surface 53 has a concave shape. The plurality of grating grooves 60 is formed on the reflective surface 53. The plurality of grating grooves 60 is arranged along the reflective surface 53 contiguously from the first edge 55 of the reflective surface 53 toward the opposite second edge 56. The plurality of grating grooves 60 extends along the reflective surface 53 in the X-direction orthogonal to the Y-direction in which the plurality of grating grooves 60 is arranged. Each of the plurality of grating grooves 60 has a triangular cross-sectional shape in the YZ plane perpendicular to the X-direction. The closer a grating groove 60 is to the first edge 55, the smaller the width of the grating groove 60. The farther a grating groove 60 is from the first edge 55, the larger the width of the grating groove 60. The closer adjacent grating grooves 60 are to the first edge 55, the larger the difference in width W between the adjacent grating grooves 60. The farther adjacent grating grooves 60 are from the first edge 55, the smaller the difference in width W between the adjacent grating grooves 60 becomes. This contributes to improving the spectral characteristics of the diffraction grating 50. That is, higher-order coma aberrations due to diffraction by the diffraction grating 50 are suppressed.
(2) The heights H of the plurality of grating grooves 60 are all equal. This contributes to the diffraction grating 50 having a high diffraction efficiency at the design wavelength λ. In particular, the diffraction efficiency of the diffraction grating 50 is maximized at the design wavelength λ.
(3) The reflective surface 53 of the diffraction grating 50 is provided as a free-form surface. In the region of the reflective surface 53 closer to the first edge 55 than the center 54, the curvature of the reflective surface 53 increases as the distance from the center 54 increases. In the region of the reflective surface 53 closer to the second edge 56 than the center 54, the curvature of the reflective surface 53 decreases as the distance from the center 54 increases. These contribute to the suppression of coma aberration of the reflective surface 53.
(4) When the apexes 61 and the base vertices of the respective grating grooves 60 are projected onto the tangent plane 85 by parallel projection, the straight lines 87 appear on the tangent plane 85. Therefore, the formation of the grating grooves 60 is easy. For example, the grating grooves 60 can be readily formed by machining or the like.
(5) Since the reflective surface 53 of the diffraction grating 50 has a light-condensing function, no separate lens is required between the diffraction grating 50 and the light-receiving sensor 90. The use of such a diffraction grating 50 contributes to the miniaturization of the spectrometer 1 that employs the diffraction grating 50.
(6) One or more embodiments have been described and illustrated in detail above. The embodiments disclosed above are provided for illustrative and exemplary purposes only and are not intended to limit the scope of the present invention. The scope of the present invention is to be interpreted in accordance with the terms of the claims.

### Reference Signs List

1 spectrometer
40 light-shielding member
41 slit
50 diffraction grating
51 main body
55 first edge
56 second edge
60 grating groove
90 light-receiving sensor

## Claims

1. A diffraction grating comprising:
a main body;
a reflective surface that is formed on a surface of the main body and has a concave shape; and
a plurality of grating grooves formed on the reflective surface, wherein
the plurality of grating grooves is arranged along the reflective surface contiguously from a first edge of the reflective surface toward a second edge opposite the first edge,
the plurality of grating grooves extends along the reflective surface in a direction orthogonal to a direction in which the plurality of grating grooves is arranged,
each of the plurality of grating grooves has a triangular cross-sectional shape in a cross section perpendicular to the direction in which the each of the plurality of grating grooves extends,
a width of one of the plurality of grating grooves in the direction in which the plurality of grating grooves is arranged is smaller as the one of the plurality of grating grooves is closer to the first edge, and
a difference in width between adjacent ones of the plurality of grating grooves is larger as the adjacent ones of the plurality of grating grooves are closer to the first edge.

2. The diffraction grating according to claim 1, wherein the plurality of grating grooves is equal in height to each other.

3. The diffraction grating according to claim 1 or 2, wherein the reflective surface is provided as a free-form surface.

4. The diffraction grating according to claim 3, wherein,
in a region of the reflective surface closer to the first edge than a center of the reflective surface, a curvature of the reflective surface increases as a distance from the center increases, and,
in a region of the reflective surface closer to the second edge than the center, the curvature of the reflective surface decreases as the distance from the center increases.

5. The diffraction grating according to claim 1 or 2, further comprising a reflective film that covers the plurality of grating grooves and reflects visible light and infrared light.

6. A spectrometer comprising:
a light-shielding member that has a slit;
the diffraction grating according to claim 1 or 2; and
a light-receiving sensor, wherein
the diffraction grating is inclined toward the first edge from an orientation in which the reflective surface faces the light-shielding member, and
the light-receiving sensor is disposed offset from an optical axis toward a side that the inclined diffraction grating faces, the optical axis extending from the slit to the reflective surface.
